# EUROPÄISCHE PATENTANMELDUNG

(11) **EP 2 071 166 A2**
(43) Veröffentlichungstag der Anmeldung: **17.06.2009**
(21) Anmeldenummer: 08021343.2
(22) Anmeldetag: 09.12.2008
(51) Int. Cl.: F02D 41/22, F02P 19/02, G01M 15/08

(54) **Verfahren zum Prüfen eines Verbrennungsmotors**

(30) Priorität: 11.12.2007 DE 102007059793
(71) Anmelder: ThyssenKrupp Krause GmbH, 28777 Bremen (DE)
(72) Erfinder: Berger, Hartmut, 28777 Bremen (DE); Lilienkamp, Thorsten, 28357 Bremen (DE); Rohde, Christian, 28359 Bremen (DE)
(74) Vertreter: Möller, Friedrich

(57) **Zusammenfassung**

Verbrennungsmotoren werden nach der Montage im sogenannten Kalttest geprüft. Dabei erfolgt ein schleppender Antrieb des zu prüfenden Verbrennungsmotors. Bei der Prüfung von Verbrennungsmotoren mit Druckaufnehmern aufweisenden Glühkerzen wird auch der Zylinderinnendruck beim geschleppten Verbrennungsmotor ermittelt.

Die Erfindung sieht es vor, während einer kurzen Prüfphase, bei der Brennstoff eingespritzt und gezündet wird, die Innendrücke der einzelnen Zylindern mit den Druckaufnehmern der Glühkerzen zu messen und vorzugsweise die gewonnenen Druckmesswerte mit Referenzwerten zu vergleichen, die beim Schleppen des unbefeuerten Verbrennungsmotors ermittelt worden sind. Das erfindungsgemäße Verfahren ermöglicht ohne nennenswerten zusätzlichen Aufwand durch Verwendung der ohnehin vorhandenen Druckaufnehmer in den Glühkerzen eine zylinderabhängige Ermittlung mindestens der Leistung des Verbrennungsmotors.

## Beschreibung

Die Erfindung betrifft ein Verfahren zum Prüfen eines Glühkerzen aufweisenden Verbrennungsmotors gemäß dem Oberbegriff des Anspruchs 1.

Verbrennungsmotoren werden nach ihrer Montage verschiedenen Prüfungen unterzogen, um vor dem Einbau in insbesondere Fahrzeuge sicherzustellen, dass sie die Anforderungen erfüllen. Es sind verschiedene Prüfungen für Verbrennungsmotoren nach ihrer Montage bekannt, insbesondere sogenannte Kalttests, bei denen die Verbrennungsmotoren im ungefeuerten Zustand, beispielsweise von einem Elektromotor, angetrieben (geschleppt) werden.

Glühkerzen aufweisende Verbrennungsmotoren verfügen vielfach über mit Druckaufnehmern versehene Glühkerzen. Dadurch lassen sich beim Betrieb der Verbrennungsmotoren Druckwerte erfassen. Bei der Prüfung von Verbrennungsmotoren werden die Druckaufnehmer bislang nicht verwendet. Das vor allem deshalb, weil im Kalttest, also beim schleppenden Antrieb der Verbrennungsmotoren, die Druckaufnehmer der Glühkerzen nur wenig aussagekräftige Messwerte liefern.

Der Erfindung liegt die Aufgabe zugrunde, ein vereinfachtes Verfahren zum Prüfen eines Verbrennungsmotors zu schaffen, in das Messwerte der Druckaufnehmer der Glühkerzen vorteilhaft einbezogen sind.

Ein Verfahren zur Lösung dieser Aufgabe weist die Maßnahmen des Anspruchs 1 auf. Demnach ist vorgesehen, während der Prüfung Brennstoff in den Verbrennungsmotor einzuspritzen und dabei Messungen mit den Druckaufnehmern der Glühkerzen vorzunehmen. Das erfindungsgemäße Verfahren lässt sich beim Kalttest durchführen. Infolge der Brennstoffeinspritzung können mit den Druckaufnehmern der Glühkerzen Messwerte auch beim befeuerten Betrieb des Verbrennungsmotors ermittelt werden. Die Messwerte lassen Prognosen über die Leistung des geprüften Verbrennungsmotors zu. Es kann vor allem die Leistung jedes einzelnen Zylinders unter Heranziehung der von den Druckaufnehmern der Glühkerzen erhaltenen Messwerte ermittelt werden. Im Falle einer zu geringen Leistung des Verbrennungsmotors lässt sich gezielt feststellen, weicher Zylinder nicht in Ordnung ist.

Es ist bevorzugt vorgesehen, von den Druckaufnehmern der Glühkerzen den Innendruck jedes einzelnen Zylinders fortlaufend während der Testphase des Verbrennungsmotors zu messen, und zwar erfindungsgemäß nicht nur beim Kalttest, vielmehr auch in einer solchen Testphase, bei der Kraftstoff in die Zylinder eingespritzt wird. Der Zylinderinnendruck, der beim während der Einspritzung von Brennstoff von den Druckaufnehmern ermittelbar ist, lässt auf einfache Weise Aussagen über die Leistung des jeweiligen Zylinders des geprüften Verbrennungsmotors zu.

Gemäß einer Weiterbildung des Verfahrens ist vorgesehen, dass die fortlaufend während der Testphase mit Kraftstoffeinspritzungen ermittelten Zylinderinnendruckwerte jedes Zylinders separat auf den Kurbelwinkel bezogen ermittelt und vorzugsweise aufgezeichnet bzw. gespeichert werden. Die Prüfung ergibt dadurch über alle Arbeitstakte des Verbrennungsmotors hinweg die jeweiligen Zylinderinnendruckwerte, die vorzugsweise Kompressionsdruckwerten entsprechen, jedes Zylinders, woraus Rückschlüsse über das gesamte Betriebesverhalten des Verbrennungsmotors gezogen werden können.

Nach einer bevorzugten Weiterbildung des Verfahrens ist vorgesehen, vor der Prüfphase mit Kraftstoffeinspritzung, also während des im Kalttest geschleppten Verbrennungsmotors, von den Drucksensoren der Glühkerzen ermittelte Zylinderinnendruckwerte auf den Kurbelwinkel bezogen zu ermitteln und vorzugsweise aufzuzeichnen und/oder zu speichern. Diese beim reinen Kalttest unbefeuerter Verbrennungsmotoren zylinderabhängig gewonnenen Innendruckwerte, insbesondere Mittelwerte mehrerer Zylinderinnendruck- oder Kompressionsdruckwerte, können als Referenzwerte für die anschließende Prüfphase mit Kraftstoffeinspritzung herangezogen werden. Der Vergleich der Zylinderinnnedruckwerte des unbefeuerten Verbrennungsmotors mit Zylinderinnendruckwerten oder Mittelwerte mehrerer Zylinderinnendruckwerte des befeuerten Verbrennungsmotors lässt gezielte Rückschlüsse auf Charakteristiken des Betriebsverhaltens des Verbrennungsmotors, und zwar jedes einzelnen Zylinders desselben, zu.

Bevorzugt wird das Verfahren, insbesondere die Druckmessungen mittels der Glühkerzen, während der Testphase mit Kraftstoffeinspritzung in einem unteren Drehzahlbereich von bis zu 2.000 U/min durchgeführt, insbesondere im Leerlauf- und Teillastbereich des Verbrennungsmotors. Dadurch kann die Prüfung gemäß einer weiteren bevorzugten Ausgestaltung des Verfahrens ohne eine Kühlung des Verbrennungsmotors während der Prüfphase mit Kraftstoffeinspritzung erfolgen. Die Prüfung wird dadurch vereinfacht, weil am Prüfstand Anschlüsse für die Kühlwasserzu- und -abfuhr nicht erforderlich sind und keine Kühlflüssigkeit austreten kann, wenn der Verbrennungsmotor aus dem Prüfstand ausgebaut wird. Es ist aber denkbar, während des befeuerten Betriebs des Verbrennungsmotors Temperaturen desselben, vor allem Öltemperatur und Zylinderkopftemperatur, zu messen und die Messwerte zur Kompensation der von den Druckaufnehmern der Glühkerzen stammenden Messwerte zu verwenden.

Gemäß einer weiteren Ausgestaltung des erfindungsgemäßen Verfahrens finden bei der Prüfung mit Kraftstoff Zündungen in den Zylindern statt, so dass der Test unter realitätsnahen Betriebsbedingungen durchgeführt werden kann. Gemäß einer bevorzugten Ausgestaltung dieser Verfahrensweise ist vorgesehen, dass während der Testphase mit Kraftstoffeinspritzung nur eine geringe Anzahl von Zündungen pro Zylinder erfolgt, beispielsweise bis zu 20 Zündungen pro Zylinder, insbesondere 10 bis 20 Zündungen pro Zylinder. Auch dadurch kann während der Testphase mit Kraftstoffeinspritzung trotz der Zündung in den Zylindern auf eine Kühlung verzichtet werden, weil die wenigen Zündungen den Motor nicht bis auf die Betriebstemperatur erwärmen.

Des Weiteren findet beim erfindungsgemäßen Verfahren eine Prüfung des Verbrennungsmotors auch in der Prüfphase mit Kraftstoffeinspritzung ohne eine Aufladung statt. Die Prüfung kann so ohne Betrieb des jeweiligen Turboladers durchgeführt werden, wodurch von der Aufladung die von Druckaufnehmern der Glühkerzen aufgenommenen Zylinderinnendrücke nicht beeinflusst werden. Außerdem gehen von den Turboladern bei der Prüfung keine nachteiligen Einflüsse aus.

Gemäß einem weiteren Vorschlag der Erfindung wird der Antrieb zum Schleppen des Verbrennungsmotors beim Kalttest in der Prüfphase mit Krafteinspritzung und Zündung als Bremse betrieben, Während dieses Bremsbetriebs kann das vom Verbrennungsmotor in der Prüfphase mit Kraftstoffeinspritzung und Zündung entwickelte Drehmoment ermittelt werden.

Das Verfahren kann auch zur Ermittlung der in jeden Zylinder eingespritzten Kraftstoffmenge eingesetzt werden, wenn in der Prüfphase mit Krafteinstoffspritzung aus dem Einspritzdruck und die Öffnungszeit der jeweiligen Einspritzdüse die eingespritzte Kraftstoffmenge ermittelt wird. Der Einspritzdruck lässt sich dabei aus den Messwerten ermitteln, die die den Glühkerzen zugeordneten Druckaufnehmer beim Einspritzen des Kraftstoffs ermitteln. Es erübrigen sich auf diese Weise Durchflussmesser, um die Einspritzmenge festzustellen.

Weiterhin ist verfahrensmäßig vorgesehen, die Druckmesswerte, die vom Druckaufnehmer der Glühkerze jedes Zylinders bei der Prüfung mit Kraftstoffeinspritzung und Zündung ermittelt werden, heranzuziehen, um die Leistung jedes einzelnen Zylinders des Verbrennungsmotors zu ermitteln, nämlich anhand der gemessenen Zylinderinnendruckwerte hochzurechnen.

### Nachfolgend wird ein bevorzugtes Ausführungsbeispiel der Erfindung näher beschrieben:

Der zu prüfende Verbrennungsmotor mit Druckaufnehmern aufweisenden Glühkerzen wird zum Kalttest einem Prüfstand zugeordnet. Beim Prüfstand handelt es sich um einen solchen, der üblicherweise für Kalttests verwendet wird, indem er einen Antrieb, beispielsweise einen Elektromotor, aufweist, der zur Prüfung den Verbrennungsmotor von der Schwungscheibe her drehend antreibt. Der zu prüfende Verbrennungsmotor wird so während des Kalttests schleppend angetrieben.

Zumindest die Druckaufnehmer der Glühkerzen sind jeweils für sich an eine Messeinrichtung, insbesondere einen Messrechner, angeschlossen, der die Messwerte der einzelnen Druckaufnehmer auswertet und gegebenenfalls speichert, und zwar bezogen auf jeden einzelnen Zylinder des Verbrennungsmotors.

Um den Verbrennungsmotor mit Kraftstoff versorgen zu können und auch Zündungen zu ermöglichen, ist das Einspritzsystem mit Kraftstoff versorgbar. Außerdem ist eine Abgasabsaugung vorgesehen. Zum Anlassen des Motors während der Prüfphase mit Kraftstoffeinspritzung dient der zum schleppenden Antrieb ohnehin vorhandene Elektromotor, der dann die Funktion eines Anlassers übernimmt. Weitere Anschlüsse brauchen zum Prüfen des Verbrennungsmotors auf dem Prüfstand nicht vorhanden zu sein, insbesondere keine Kühlwasserversorgung. Es findet auch keine Aufladung des Verbrennungsmotors während der Prüfung statt. Turbolader müssen deshalb noch nicht zwingend verbaut sein, wenn der Verbrennungsmotor im erfindungsgemäßen Verfahren geprüft wird.

Nachdem der zu prüfende Verbrennungsmotor im Prüfstand eingebaut ist und die erforderlichen Anschlüsse mit vorzugsweise Schnellkupplungen hergestellt worden sind, findet in einer ersten Prüfphase ein Kalttest mit geschlepptem, ungefeuerten Verbrennungsmotor statt. In dieser ersten Prüfphase wird der Verbrennungsmotor am Schwungrad vom Elektromotor drehend angetrieben. Hierbei werden unter anderem von den Druckaufnehmern der Glühkerzen die Kompressionsdrücken entsprechenden Innendrücke in den einzelnen Zylindern gemessen, und zwar in Abhängigkeit vom Kurbelwinkel. Es erfolgen zumindest über ein komplettes Arbeitsspiel des geschleppten Verbrennungsmotors mehrere aufeinanderfolgende Messungen der Innendrücke der Zylinder und der jeweils dazugehörigen Kurbelwinkel. Bevorzugt ist vorgesehen, die Innendrücke der einzelnen Zylinder des geschleppten Verbrennungsmotors über mehrere Arbeitsspiele, beispielsweise 10 bis 20 Arbeitsspiele, zu messen. Dabei werden das Maximum des gemessenen Innendrucks, nämlich der maximale Kompressionsdruck, und seine Position bezogen auf den Kurbelwinkel bestimmt. Die über vorzugsweise 10 bis 20 Arbeitsspiele aufgenommenen Messwerte werden gemittelt und daraus ein Kompressionsintegral errechnet.

Mindestens die so bestimmten Mittelwerte des Kompressionsdrucks, insbesondere des Kompressionsintegrals, werden bezogen auf den Kurbelwinkel für jeden einzelnen Zylinder aufgezeichnet und/oder abgespeichert. Gegebenenfalls können zusätzliche individuellen Messwerte jedes Arbeitsspiels aufgezeichnet bzw. abgespeichert werden.

Das kurbelwellenwinkelabhängige Kompressionsintegral, nämlich der Mittelwert aus Messungen mehrerer Arbeitsspiele des geschleppten Verbrennungsmotors, werden als Referenzwerte für jeden Zylinder bei der nächsten Prüfphase verwendet, in der der Verbrennungsmotor mit Kraftstoff im gezündeten Zustand geprüft wird.

In der nachfolgenden Prüfphase wird der Verbrennungsmotor im Warmtest betrieben, also der eingespritzte Kraftstoff gezündet. Dabei erfolgt vorher eine Optimierung der Einspritzparameter. Der Warmtest erfolgt allerdings nur über einen kurzen Zeitraum mit wenigen Arbeitsspielen, und zwar bis zu 20 Zündungen, vorzugsweise etwa 10 bis 20 Zündungen. Dabei wird der zu prüfende Verbrennungsmotor im Leerlauf und/oder nur unter Teillast bei einer relativ niedrigen Drehzahl von bis zum 2.000 U/min, insbesondere in einem Drehzahlbereich zwischen 300 U/min und 1.500 U/min, betrieben. Während dieser Prüfung erfolgt keine Aufladung des befeuerten Verbrennungsmotors. Während dieser Betriebsprüfung des befeuerten Verbrennungsmotors erfolgt auch keine Kühlung desselben, weil diese befeuerte Prüfung nur über einen sehr kurzen Zeitraum hinweg stattfindet, in dem sich der Verbrennungsmotor nicht so weit erwärmt, dass eine Kühlung erforderlich wäre. Es ist aber denkbar, dass durch Messung der Öltemperatur und/oder der Zylinderkopftemperatur Änderungen dieser Temperaturen bei der befeuerten Prüfung des Verbrennungsmotors kontinuierlich mitgemessen werden. Anhand dieser Temperaturmesswerte kann dann eine Kompensation der Druckmesswerte erfolgen, die am befeuerten Verbrennungsmotor aufgenommen worden sind.

In der Prüfphase, in der der Verbrennungsmotor befeuert wird, arbeitet der während des vorangehenden Kalttests als Antrieb zum Schleppen des Verbrennungsmotors dienende Elektromotor als Bremse. Diese Bremse ist so ausgebildet, dass sie das Drehmoment während der Prüfphase mit eingespritztem Kraftstoff vorzugsweise fortlaufend und kontinuierlich an der Schwungscheibe misst.

Die bei der befeuerten Prüfung des Verbrennungsmotors erhaltenen Innendrücke jedes Zylinders werden ebenfalls auf den jeweiligen dazugehörenden Kurbelwinkel bezogen. Durch ständige Messungen des Innendrucks, nämlich des Kompressionsdrucks, jedes Zylinders durch die Druckaufnehmer der Glühkerzen werden über mehrere Arbeitsspiele mit jeweils einer Zündung hinweg die Innendrücke jedes Zylinders über den Kurbelwinkel vorzugsweise kontinuierlich ermittelt. Es erfolgt dann eine Mittelung der bei mehreren, vorzugsweise etwa 10 bis 20 Arbeitsspielen, ermittelten kurbelwellenwinkelbezogenen Druckwerte. Bevor eine Auswertung der Druckwerte erfolgt, werden die Messsignale gefiltert.

Aus den gemittelten kurbelwellenwinkelbezogenen Kompressionsdruckwerten des Kalttests und aus den ermittelten kurbelwellenwinkelbezogenen Kompressionsdruckwerte bei der Prüfung des befeuerten Verbrennungsmotors (im Warmtest) wird die Differenz gebildet. Anschließend wird aus dieser Differenz die erste Ableitung berechnet. Die erste Ableitung der Differenz der kurbelwellenwinkelbezogenen Kompressionsdruckwerte im Kalttest und beim befeuerten Verbrennungsmotor wird herangezogen für die weitere Auswertung der Prüfergebnisse. Insbesondere lassen sich aus der ersten Ableitung der Differenz der kurbelwellenwinkelbezogenen Kompressionsdruckwerte die spezifische Leistung jedes einzelnen Zylinders des zu prüfenden Verbrennungsmotors ermitteln.

Denkbar ist es auch, mehrere Messreihen beim befeuerten Motor durchzuführen, und zwar mit unterschiedlichen Treibstoffeinspritzungen. Es wird so ein weiterer Datensatz von auf den Kurbelwellenwinkel bezogenen Druckwerten, insbesondere Kompressionsdruckwerten, erhalten. Die Werte wiederum werden mit den Werten aus dem Kalttest verglichen wird durch Differenzbildung und Berechnung der ersten Ableitung der Differenz. Es kann so eine Bestimmung der Gleichverteilung der eingespritzten Kraftstoffmenge der Einspritzdüsen bzw. Injektoren vorgenommen werden.

Bei Dieselmotoren mit Drallklappen finden die zuvor beschriebenen Messungen bei geöffneter Drallklappe statt. Denkbar ist es auch, im Anschluss daran eine weitere Messreihe durchzuführen, bei der der befeuerte Dieselmotor mit geschlossenen Drallklappen betrieben wird. Zur Auswertung der Prüfung werden dann mit den Messwerten des Kalttests bei geöffneten Drallklappen die Messwerte bei befeuertem Dieselmotor mit geöffneter Drallklappe und befeuertem Dieselmotor mit geschlossener Drallkappe verglichen.

Das erfindungsgemäße Verfahren eignet sich auch zur Ermittlung anderer Größen, beispielsweise die Menge des in jeden Zylinder pro Arbeitszeit eingespritzten Kraftstoff in der Prüfphase mit Zündung. Diese Einspritzmenge wird ermittelt durch den Einspritzdruck, der aus dem von den Druckaufnehmern der Glühkerzen gemessenen Innendruck jedes Zylinders ableitbar ist, und Öffnungszeiten der Einspritzdüsen.

Die in der Prüfphase mit der Einspritzung von Kraftstoff von den Druckaufnehmern der Glühkerzen ermittelten Innendruckwerte jedes einzelnen Zylinders können auch für weitere Prüfungen bzw. Messungen herangezogen werden, beispielsweise die Ladungsbewegung oder Ladungsverteilung des eingespritzten Kraftstoffs im jeweiligen Zylinder, die Einspritzung selbst und/oder die Motorgeometrie bezogen auf den jeweiligen Zylinder.

## Patentansprüche

1. Verfahren zum Prüfen eines Glühkerzen aufweisenden Verbrennungsmotors auf einem Motorprüfstand, wobei der Verbrennungsmotor mindestens zeitweise schleppend angetrieben wird und von Druckaufnehmern aufweisenden Glühkerzen der Druck jedes Zylinders gemessen wird, **dadurch gekennzeichnet, dass** während der Prüfung Brennstoff in den Verbrennungsmotor eingespritzt wird und dabei Messungen mit den Druckaufnehmern der Glühkerzen vorgenommen werden.

2. Verfahren nach Anspruch 1, **dadurch gekennzeicichnet, dass** von den Druckaufnehmern der Glühkerzen der Innendruck jedes Zylinders fortlaufend, vorzugsweise kontinuierlich über mindestens ein Arbeitsspiel mit einer Zündung hinweg während der Prüfphase, in der Kraftstoff eingespritzt wird, gemessen wird.

3. Verfahren nach Anspruch 1 oder 2, **dadurch gekennzeichnet dass** während der Prüfphase mit Kraftstoffeinspritzung fortlaufend der Innendruck jedes Zylinders ermittelt wird und der Innendruck jedes Zylinders bei jeder Messung auf den dazugehörenden Kurbelwinkel bezogen wird, insbesondere die Innendruckwerte jedes Zylinders zusammen mit den dazugehörenden Kurbelwinkeln über mindestens ein Arbeitsspiel des Verbrennungsmotors aufgezeichnet und/oder gespeichert werden.

4. Verfahren nach einem der vorhergehenden Ansprüche, **dadurch gekennzeichnet, dass** vor der Prüfphase mit Kraftstoffeinspritzung von den Druckaufnehmern der Glühkerzen im Kalttest Innendruckwerte der einzelnen Zylinder ermittelt und auf den dazugehörenden Kurbelwinkel bezogen werden, insbesondere die auf den jeweiligen Kurbelwinkel bezogenen Innendruckwerte der einzelnen Zylinder als Referenzwerte aufgezeichnet und/oder gespeichert werden.

5. Verfahren nach Anspruch 4, **dadurch gekennzeichnet, dass** die beim Kalttest ermittelten Referenzwerte mit den auf den Kurbelwinkel bezogenen Innendruckwerten bei der Prüfphase mit Kraftstoffeinspritzung verglichen werden, vorzugsweise Innendruckwerte gleicher Zylinder bei gleichem Kurbelwinkel.

6. Verfahren nach Anspruch 4, **dadurch gekennzeichnet, dass** eine Differenz zwischen den beim Kalttest ermittelten kurbetwollenwinkelbezogenen Innendruckwerten der einzelnen Zylinder und den mit Kraftstoffeinspritzung und Zündung ermittelten kurbelwellenwinkelbezogenen Innendruckwerten der einzelnen Zylinder gebildet wird, und vorzugsweise von dieser Differenz die erste Ableitung berechnet wird.

7. Verfahren nach einem der vorhergehenden Ansprüche, **dadurch gekennzeichnet, dass** in der Prüfphase mit Kraftstoffeinspritzung die eingespritzte Kraftstoffmenge aus dem Einspritzdruck und die Öffnungszeit der Einspritzdüse separat für jeden einzelnen Zylinder ermittelt wird.

8. Verfahren nach einem der vorhergehenden Ansprüche, **dadurch gekennzeichnet, dass** die Druckmesswerte von den Druckmessgebern jeder Glühkerze verwendet werden zur Ermittlung der Leistung des Verbrennungsmotors, vorzugsweise der Leistung jedes Zylinders, der Ladungsbewegung in jedem Zylinder, der Motorgeometrie, insbesondere jedes Zylinders, und/oder der Einspritzung.

9. Verfahren nach einem der vorhergehenden Ansprüche, **dadurch gekennzeichnet, dass** die Druckmessungen während der Prüfphase mit Kraftstoffeinspritzung in einem unteren Drehzahlbereich von bis zu 2.000 U/min, vorzugsweise zwischen 300 Ulmin und 1.500 U/min, durchgeführt werden.

10. Verfahren nach einem der vorhergehenden Ansprüche, **dadurch gekennzeichnet, dass** die Prüfphase mit Kraftstoffeinspritzung mit Zündung erfolgt, vorzugsweise nur während einer geringen Anzahl von Zündungen, beispielsweise bis zu 20 Zündungen pro Zylinder.

11. Verfahren nach einem der vorhergehenden Ansprüche, **dadurch gekennzeichnet, dass** in der Prüfphase mit Kraftstoffeinspritzung keine Aufladung des Verbrennungsmotors erfolgt und/oder die Prüfphase mit Kraftstoffeinspritzung ohne eine Kühlung des Verbrennungsmotors durchgeführt wird.

12. Verfahren nach einem der vorhergehenden Ansprüche, **dadurch gekennzeichnet, dass** in der Prüfphase mit Kraftstoffeinspritzung mehrere Messreihen durchgeführt werden, vorzugsweise mit unterschiedlichen Kraftstoffeinspritzmengen und/oder bei geöffneten und geschlossenen Drallklappen.

13. Verfahren nach einem der vorhergehenden Ansprüche, **dadurch gekennzeichnet, dass** ein Antrieb zum Schleppen des Verbrennungsmotors in der Prüfphase mit Kraftstoffeinspritzung als Bremse betrieben wird.

14. Verfahren nach Anspruch 13, **dadurch gekennzeichnet, dass** von der Bremse das Drehmoment des Verbrennungsmotors in der Prüfphase desselben mit Kraftstoffeinspritzung ermittelt wird, vorzugsweise kontinuierlich und/oder auf den Kurbelwinkel bezogen.
